# EUROPÄISCHE PATENTANMELDUNG

(11) **EP 3 828 028 A1**
(43) Veröffentlichungstag der Anmeldung: **02.06.2021**
(21) Anmeldenummer: 19212428.7
(22) Anmeldetag: 29.11.2019
(51) Int. Cl.: B60N 2/68, B60R 5/00, B60R 5/04

(54) **LADERAUMERWEITERUNG**

(71) Anmelder: MAGNA STEYR Fahrzeugtechnik AG & Co KG, 8041 Graz (AT)
(72) Erfinder: ERLACHER, Manuel, 9545 Radenthein (AT); PLANKA, Franz, 9433 St. Andrä (AT); ZACHNEGGER, Harald, 8041 Graz (AT)
(74) Vertreter: Zangger, Bernd

(57) **Zusammenfassung**

Ein Kraftfahrzeug mit einer Laderaumerweiterung, umfassend eine Trennwand (1) zur Trennung zwischen einem Laderaum und einer Fahrgastzelle des Kraftfahrzeugs, wobei die Trennwand (1) im Wesentlichen bis zu einem Boden des Laderaums und/oder der Fahrgastzelle des Kraftfahrzeugs reicht, wobei die Trennwand (1) ein ausfaltbares Element (2) umfasst, so dass das ausfaltbare Element (2) in einem Nichtgebrauchszustand im Wesentlichen in der Ebene der Trennwand (1) liegt und in einem Gebrauchszustand eine Ausstülpung der Trennwand (1) in die Fahrgastzelle hinein bildet.

## Beschreibung

### Gebiet der Erfindung

Die vorliegende Erfindung betrifft ein Kraftfahrzeug mit einer Laderaumerweiterung.

### Stand der Technik

Es ist bekannt das viele Kraftfahrzeuge eine Fahrgastzelle mit Sitzen für Fahrer und Passagiere aufweisen und zusätzlich einen Laderaum, für das Verstauen von zu transportierenden Gütern. Für sperrige Güter, wie beispielsweise Skier, ist es manchmal erforderlich Maßnahmen zu ergreifen, um den nutzbaren Laderaum des Fahrzeugs zu vergrößern. Beispielsweise können die Lehnen von Sitzen von hinteren Sitzreihen oft nach vorne umgeklappt werden, um einen Durchgang zwischen Laderaum und Fahrgastzelle zu schaffen. Um Verschmutzungen der Fahrgastzelle zu vermeiden ist beispielsweise die Verwendung von Skisäcken bekannt, die durch derartige Durchgänge reichen können und üblicherweise auf der Hinterseite einer nach vorne geklappten Rückenlehne eines Sitzes gelagert werden.

Zum Transport eines Fahrrads in einem Fahrzeug offenbart beispielsweise die JP2017047697A eine Fahrradbefestigungsvorrichtung zum Befestigen eines Fahrrads, das in einem Fahrzeug untergebracht ist, wobei die Fahrradbefestigungsvorrichtung umfasst: eine Schiene, die am Boden des Fahrzeugs befestigt ist, um das Fahrrad zu platzieren; und einen Arm zum Befestigen des Fahrrads, wobei der Arm zu einem Türöffnungsabschnitt drehbar ist und der Arm zu dem Türöffnungsabschnitt schwenkbar ist, so konfiguriert ist, dass mindestens ein Teil des Fahrrads gedreht wird, worin das Fahrrad so angeordnet ist, dass das Fahrrad in einem Zustand befestigt werden kann, in dem es außerhalb des Fahrzeugs über den Türöffnungsabschnitt angeordnet ist.

Zur Lagerung oder Befestigung von Gegenständen auf der Rückseite einer umgeklappten Rückenlehen offenbart die DE19854240A1 eine Ladungssicherungsvorrichtung für Personenkraftwagen, wie für Kombinationskraftwagen, Großraumlimousinen oder dergleichen, mit fahrzeugseitigen Rastelementen, welche eine lösbare Rastverbindung mit Gegenrastelementen eines modulartigen Flächenelements bilden, das mindestens eine Haltefläche für ein Fahrzeug-Ausstattungsteil aufweist, wobei eine die Anzahl der Gegenrastelemente übersteigende, eine unterschiedliche Anordnung des modulartigen Flächenelements gestattende, Anzahl von fahrzeugseitigen Rastelementen an gleichartigen und/oder an ungleichartigen fahrzeugseitigen Einbaufeldern vorhanden ist, wobei die fahrzeugseitigen Rastelemente ebenso wie die Gegenrastelemente in einer bestimmten einheitlichen Rasterteilung angeordnet sind.

### Zusammenfassung der Erfindung

Es ist eine Aufgabe der Erfindung, ein Kraftfahrzeug mit einer alternativen Laderaumerweiterung anzugeben, so dass auf einfache Weise sperrige Güter wie zum Beispiel ein Fahrrad oder ein Rollstuhl in dem Kraftfahrzeug mitgeführt werden können.

Die Lösung der Aufgabe erfolgt durch eine Kraftfahrzeug mit einer Laderaumerweiterung, umfassend eine Trennwand zur Trennung zwischen einem Laderaum und einer Fahrgastzelle des Kraftfahrzeugs, wobei die Trennwand im Wesentlichen bis zu einem Boden des Laderaums und/oder der Fahrgastzelle des Kraftfahrzeugs reicht, wobei die Trennwand ein ausfaltbares Element umfasst, so dass das ausfaltbare Element in einem Nichtgebrauchszustand im Wesentlichen in der Ebene der Trennwand liegt und in einem Gebrauchszustand eine Ausstülpung der Trennwand in die Fahrgastzelle hinein bildet.

Erfindungsgemäß verfügt ein Kraftfahrzeug über eine Trennwand, die eine Trennung zwischen dem von Passagieren genutzten Innenraum des Fahrzeuges und dem Laderaum oder Gepäckraum des Fahrzeuges bildet. Die Trennwand reicht an der Unterseite bis zu einem Boden des Laderaums, je nach Verhältnis der Bodenniveaus zwischen Laderaum und Fahrgastzelle bevorzugt auch etwa bis zum Boden der Fahrgastzelle. "Bis zum Boden" schließt dabei Ausführungen ein, bei welchen die Trennwand beispielsweise nicht über die gesamte Breite den Boden berührt oder nur ein geringer Abstand, von zum Beispiel nur wenigen Zentimetern zum Boden besteht. Selbstverständlich kann die Trennwand auch über die gesamte Breite den Boden berühren und/oder mit dem Boden, insbesondere mit dem Boden des Laderaums, verbunden sein. In der Trennwand ist ein faltbares Element angeordnet, dass zu einer Ausstülpung in die Fahrgastzelle hinein entfaltet werden kann. Das faltbare Element kann daher ein Sack oder ein sackähnliches Element sein. Wenn der zusätzliche Laderaum nicht gebraucht wird, kann das ausfaltbare Element im Wesentlichen in der Ebene der Trennwand liegen, wobei diese Ebene üblicherweise nicht genau eigehalten wird. Dadurch wird im Nichtgebrauchszustand vom entfaltbaren Element kaum Bauraum beansprucht. Wenn zusätzlicher Laderaum benötigt wird, beispielsweise um Teile eines sperrigen Gegenstands wie eines Fahrrads oder eines Rollstuhls im Laderaum unterzubringen, wird das ausfaltbare Element ausgefaltet, so dass es eine sackartige Ausstülpung in die Fahrgastzelle hinein bildet. Die Fahrgastzelle wird dadurch nicht durch die Güter in der Ausstülpung verschmutzt. Da die Trennwand, die das ausfaltbare Element aufnimmt bis zum Boden des Laderaums reicht oder zumindest fast bis zum Boden des Laderaums reicht, kann auch das ausfaltbare Element und somit die Ausstülpung tief unten beginnen, in der Nähe des Laderaumbodens. Die Ausstülpung kann daher so groß sein, dass Gegenstände von der Größe eines Fahrradreifens darin aufgenommen werden können. Auch können solche Gegenstände einfacher in das faltbare Element geschoben werden, wenn sich die Unterkante der Trennwand und der Ausstülpung in der Nähe des Bodens des Laderaums befinden.

Weiterbildungen der Erfindung sind in den abhängigen Ansprüchen, der Beschreibung sowie den beigefügten Zeichnungen angegeben.

Vorzugsweise liegt die Unterkante des ausfaltbaren Elements und/oder der Ausstülpung maximal 20 cm, bevorzugt maximal 10 cm, über dem Boden des Laderaums.

Die Oberkante des ausfaltbaren Elements und/oder der Ausstülpung liegt bevorzugt maximal 20 cm, besonders bevorzugt maximal 10 cm unter der Oberkante der Trennwand. Hierdurch wird ein möglichst großer zusätzlicher Laderaum geschaffen.

Bevorzugt ist das ausfaltbare Element und/oder die Ausstülpung so groß, dass ein Reifen eines Fahrrades mindestens zur Hälfte vom Laderaum in die Ausstülpung gesteckt werden kann und/oder dass die Höhe des ausfaltbaren Elements und/oder der Ausstülpung mindestens 58 cm beträgt, bevorzugt mindestens 63 cm und somit mindestens der Höhe üblicher Reifengrößen eines Fahrradreifens.

Vorzugsweise umfasst das Kraftfahrzeug einen Sitz mit einer Sitzfläche und mit einer Sitzlehne, wobei der Sitz im Nichtgebrauchszustand des faltbaren Elements vor der Ausstülpung angeordnet ist, so dass der Sitz die Ausstülpung der Trennwand in die Fahrgastzelle hinein im Gebrauchszustand verhindern würde. Üblicherweise in Fahrtrichtung vor der Trennwand und der möglichen Ausstülpung kann somit ein Sitz angeordnet sein.

Bevorzugt liegt die Unterkante des ausfaltbaren Elements und/oder der Ausstülpung unterhalb der Oberkante der Sitzfläche des Sitzes. Es wird somit soviel Raum durch die Ausstülpung genutzt, dass der Sitz vor der Trennwand der Ausstülpung ohne Gegenmaßnahmen im Weg wäre.

Bevorzugt ist der Sitz von der Trennwand weg nach vorne verschiebbar. Hierdurch kann der Platz genutzt werden, an dem sich sonst der Sitz befindet.

Bevorzugt kann die Lehne des Sitzes geneigt werden. Besonders bevorzugt wird die Lehne bei Verwendung der Ausstülpung nur schräg gestellt und nicht auf der Sitzfläche des Sitzes abgelegt.

Bevorzugt ist der Sitz, also der Sitz vor der Ausstülpung, der mittlere Sitz einer Sitzreihe, wobei die Sitzreihe besonders bevorzugt insgesamt drei Sitzplätze aufweist.

Die Oberkante der Trennwand liegt bevorzugt mindestens auf Höhe der Oberkante der Sitzlehne.

Vorzugsweise besteht das ausfaltbare Element aus einem flexiblen Material, also aus einem biegsamen, weichen Material, insbesondere aus einem Kunststoff oder einem Textil. Das ausfaltbare Element kann auch eine insgesamt faltbare Anordnung einzelner fester Elemente umfassen. Zwischen den festen Elementen kann dann biegsames, also flexibles Material angeordnet sein.

Die Trennwand und das ausfaltbare Element kann beispielsweise als Rahmen mit einer Bespannung aus Kunststoff oder Textil gebildet sein. Der Rahmen kann beispielsweise lediglich abschnittsweise Flächen aufweisen, die Flächen der Trennwand bilden. Das ausfaltbare Element kann beispielsweise in einem Ausschnitt mit rechteckiger, quadratischer oder runder Form in der den Rahmen bildenden Trennwand angeordnet sein. Die Trennung zwischen Laderaum und Fahrgastzelle kann auch allein durch einen dünnen oder stabförmigen oder profilförmigen Rahmen und das ausfaltbare Element in diesem Rahmen gebildet werden.

Vorzugsweise umfasst der Laderaum Mittel, die dazu ausgebildet sind, ein Fahrrad im Laderaum zu befestigen, wenn das Fahrrad, insbesondere ein Reifen des Fahrrads, teilweise in die Ausstülpung gesteckt ist.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung einer Trennwand eines erfindungsgemäßen Kraftfahrzeugs, wobei das ausfaltbare Element gefaltet ist.
- Fig. 2: ist eine dreidimensionale Darstellung einer Trennwand eines erfindungsgemäßen Kraftfahrzeugs, wobei das ausfaltbare Element entfaltet ist.
- Fig. 3: ist eine dreidimensionale Darstellung des Einbaues einer Trennwand gemäß Fig. 1 in ein Kraftfahrzeug.
- Fig. 4: ist eine dreidimensionale Darstellung der Trennwand gemäß Fig. 1, eingebaut in ein Kraftfahrzeug, wobei das ausfaltbare Element nicht in Verwendung ist.
- Fig. 5: ist eine dreidimensionale Darstellung gemäß Fig. 4, wobei der Sitz nach vorne geschoben ist.
- Fig. 6: ist eine dreidimensionale Darstellung gemäß Fig. 5, wobei das ausfaltbare Element ausgefaltet ist.
- Fig. 7: ist eine dreidimensionale Darstellung gemäß Fig. 6, wobei Hinterreifen von Fahrrädern in die Ausstülpung des ausfaltbaren Elements aufgenommen sind.
- Fig. 8: ist eine dreidimensionale Darstellung gemäß Fig. 7, jedoch von hinten.
- Fig. 9: ist eine Schnittdarstellung gemäß Fig. 8, von der Seite.
- Fig. 10: ist eine dreidimensionale Darstellung gemäß Fig. 6, wobei Vorderreifen von Fahrrädern in die Ausstülpung des ausfaltbaren Elements aufgenommen sind.
- Fig. 11: ist eine dreidimensionale Darstellung gemäß Fig. 10, jedoch von hinten.
- Fig. 12: ist eine dreidimensionale Darstellung gemäß Fig. 6, wobei die Frontseite eines Rollstuhls in die Ausstülpung des ausfaltbaren Elements aufgenommen ist.
- Fig. 13: ist eine dreidimensionale Darstellung gemäß Fig. 12, jedoch von hinten.
- Fig. 14: ist eine Schnittdarstellung gemäß Fig. 13, von der Seite.

### Detaillierte Beschreibung der Erfindung

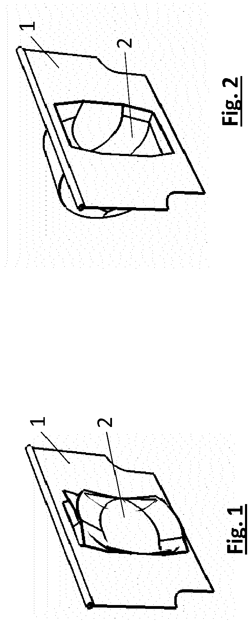

In Fig. 1 ist eine Trennwand 1 eines erfindungsgemäßen Kraftfahrzeugs dargestellt, mit einem ausfaltbaren Element 2, welches gefaltet ist, also nicht ausgefaltet und somit nicht im Gebrauchszustand. Der Gebrauchszustand des ausfaltbaren Elements 2 ist in Fig. 2 dargestellt. Hier ist das ausfaltbare Element 2, dass auch "Trennsack" genannt werden kann, ausgefaltet und somit gebrauchsfertig. Das ausfaltbare Element 2 ist aus einem flexiblen, also biegsamen, Material, insbesondere aus einem weichen Kunststoff hergestellt.

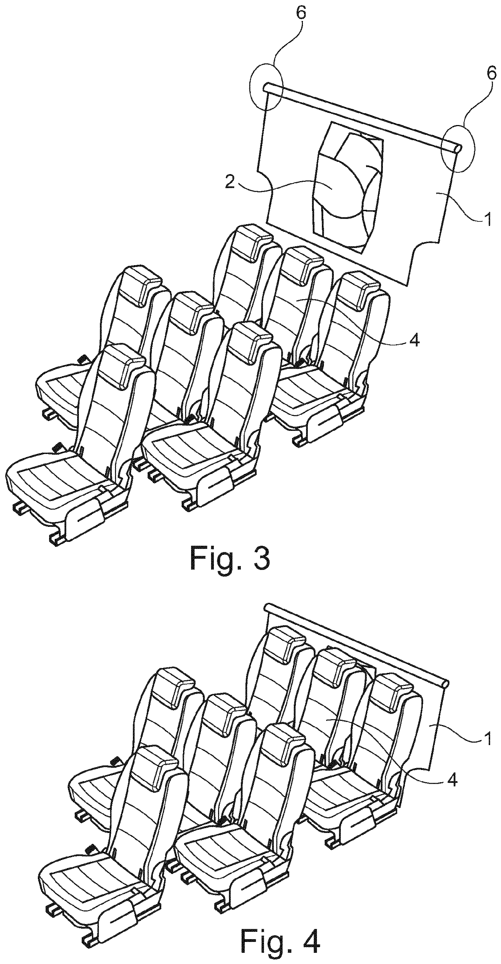

Fig. 3 zeigt den Einbau einer Trennwand 1, wie in Fig. 1 und 2 dargestellt, in ein Kraftfahrzeug, wobei lediglich Sitze in der Fahrgastzelle des Kraftfahrzeuges dargestellt sind. Die Trennwand kann mittels Verriegelungen 6, beispielsweise ähnlich einer Hutablagenbefestigung, verriegelt sein.

Fig. 4 zeigt die Trennwand 1 gemäß Fig. 1, eingebaut in ein Kraftfahrzeug, wobei das ausfaltbare Element 2 nicht in Verwendung ist.

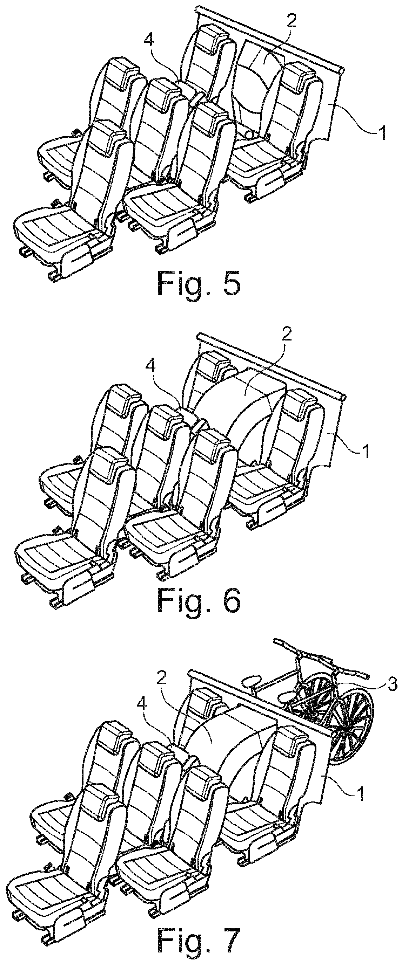

Zur Verwendung des ausfaltbaren Elements 2 kann der mittlere Sitz 4 der hinteren Sitzreihe nach vorne geschoben werden und die Sitzlehne des Sitzes 4 nach vorne geneigt werden, wie in Fig. 5 dargestellt. In Fig. 5 ist das ausfaltbare Element 2, also der "Trennsack", noch nicht ausgefaltet - in Fig. 6 ist er ausgefaltet, also im Gebrauchszustand, so dass er eine Ausstülpung der Trennwand 1 in die Fahrgastzelle hinein bildet.

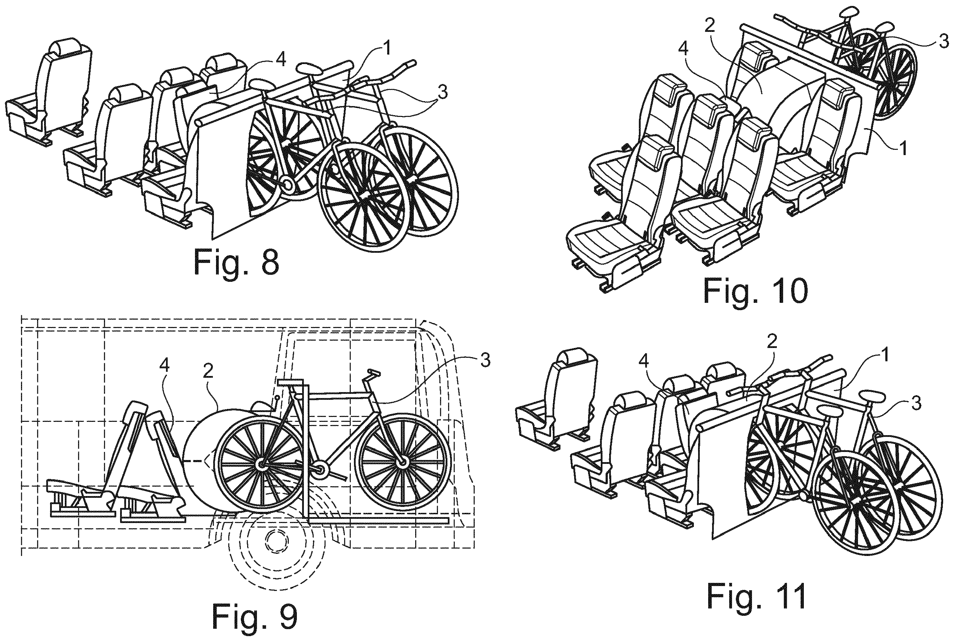

In der Darstellung Fig. 7 sind Hinterreifen von zwei Fahrrädern 3 in die Ausstülpung des ausfaltbaren Elements 2 aufgenommen und befinden sich somit, innerhalb des ausfaltbaren Elements 2, in der Fahrgastzelle. Fig. 8 zeigt die selbe Anordnung von hinter der Trennwand 1 aus gesehen und Fig. 9 zeigt wieder die selbe Anordnung in einer Schnittdarstellung von der Seite. Die Unterkante des ausfaltbaren Elements 2 und somit der Ausstülpung liegt nahe dem Boden des Laderaums und nahe dem Boden der Fahrgastzelle.

Fig. 10 ist wieder eine Darstellung der selben erfindungsgemäßen Vorrichtung, wie zum Beispiel in Fig. 7, wobei wieder Fahrräder 3 in den Laderaum und in die Ausstülpung aufgenommen sind, wobei jedoch hier die Vorderreifen von zwei Fahrrädern 3 zumindest teilweise in die Ausstülpung des ausfaltbaren Elements 2 aufgenommen sind.

Fig. 11 zeigt den Gegenstand der Fig. 10 von hinten.

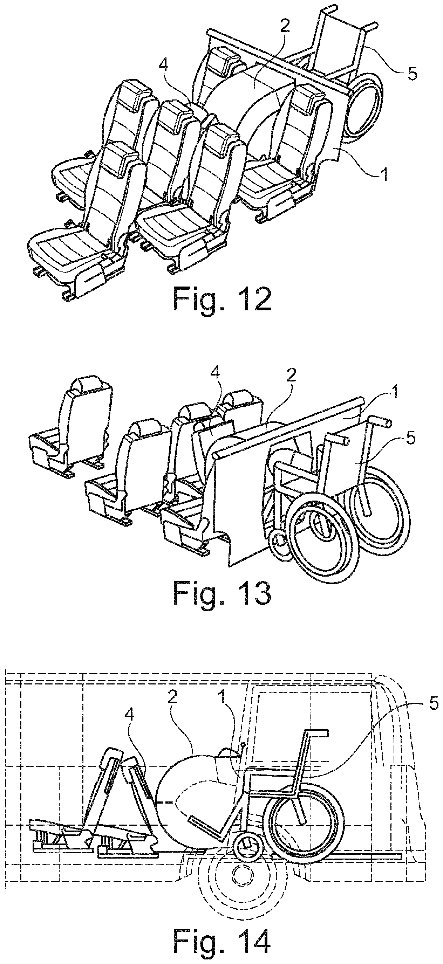

In den Fig. 12, Fig. 13 und Fig. 14 ist wieder die selbe Vorrichtung der Fig. 6 dargestellt, wobei diesmal jedoch die Frontseite eines Rollstuhls 5 in die Ausstülpung des ausfaltbaren Elements 2 aufgenommen ist. Sperrige Gegenstände, wie beispielsweise ein Rollstuhl, können somit beispielsweise teilweise, also abschnittsweise, in der Ausstülpung des ausfaltbaren Elements 2, also im "Trennsack", verstaut werden, wodurch die Fahrgastzelle eines Kraftfahrzeugs für den Gütertransport besser nutzbar wird.

### Bezugszeichenliste

- 1: Trennwand
- 2: ausfaltbares Element
- 3: Fahrrad
- 4: Sitz
- 5: Rollstuhl
- 6: Verriegelung

## Patentansprüche

1. Kraftfahrzeug mit einer Laderaumerweiterung, umfassend eine Trennwand (1) zur Trennung zwischen einem Laderaum und einer Fahrgastzelle des Kraftfahrzeugs, wobei die Trennwand (1) im Wesentlichen bis zu einem Boden des Laderaums und/oder der Fahrgastzelle des Kraftfahrzeugs reicht,
**dadurch gekennzeichnet, dass** die Trennwand (1) ein ausfaltbares Element (2) umfasst, so dass das ausfaltbare Element (2) in einem Nichtgebrauchszustand im Wesentlichen in der Ebene der Trennwand (1) liegt und in einem Gebrauchszustand eine Ausstülpung der Trennwand (1) in die Fahrgastzelle hinein bildet.

2. Kraftfahrzeug nach Anspruch 1,
**dadurch gekennzeichnet, dass** die Unterkante des ausfaltbaren Elements (2) und/oder der Ausstülpung maximal 20 cm, bevorzugt maximal 10 cm über dem Boden des Laderaums liegt.

3. Kraftfahrzeug nach zumindest einem der vorhergehenden Ansprüche,
**dadurch gekennzeichnet, dass** die Oberkante des ausfaltbaren Elements (2) und/oder der Ausstülpung maximal 20 cm, bevorzugt maximal 10 cm unter der Oberkante der Trennwand (1) liegt.

4. Kraftfahrzeug nach zumindest einem der vorhergehenden Ansprüche,
**dadurch gekennzeichnet, dass** das ausfaltbare Element (2) und/oder die Ausstülpung so groß ist, dass ein Reifen eines Fahrrades (3) mindestens zur Hälfte vom Laderaum in die Ausstülpung gesteckt werden kann und/oder dass die Höhe des ausfaltbaren Elements (2) und/oder der Ausstülpung mindestens 58 cm beträgt, bevorzugt mindestens 63 cm.

5. Kraftfahrzeug nach zumindest einem der vorhergehenden Ansprüche,
**dadurch gekennzeichnet, dass** das Kraftfahrzeug einen Sitz (4) umfasst mit einer Sitzfläche und mit einer Sitzlehne, wobei der Sitz (4) im Nichtgebrauchszustand des faltbaren Elements (2) vor der Ausstülpung angeordnet ist, so dass der Sitz (4) die Ausstülpung der Trennwand (1) in die Fahrgastzelle hinein im Gebrauchszustand verhindern würde.

6. Kraftfahrzeug nach Anspruch 5,
**dadurch gekennzeichnet, dass** die Unterkante des ausfaltbaren Elements (2) und/oder der Ausstülpung unterhalb der Oberkante der Sitzfläche des Sitzes (4) liegt.

7. Kraftfahrzeug nach Anspruch 5 oder 6,
**dadurch gekennzeichnet , dass** der Sitz (4) von der Trennwand (1) weg nach vorne verschiebbar ist.

8. Kraftfahrzeug nach zumindest einem der Ansprüche 5 bis 7,
**dadurch gekennzeichnet , dass** der Sitz (4) der mittlere Sitz einer Sitzreihe ist.

9. Kraftfahrzeug nach zumindest einem der vorhergehenden Ansprüche 5 bis 8,
**dadurch gekennzeichnet, dass** die Oberkante der Trennwand (1) mindestens auf Höhe der Oberkante der Sitzlehne liegt.

10. Kraftfahrzeug nach zumindest einem der vorhergehenden Ansprüche,
**dadurch g ekennzeichnet,** dass das ausfaltbare Element (2) aus einem flexiblen Material besteht, insbesondere aus einem Kunststoff oder einem Textil, und/oder dass das ausfaltbare Element (2) eine insgesamt faltbare Anordnung einzelner fester Elemente umfasst.

11. Kraftfahrzeug nach zumindest einem der vorhergehenden Ansprüche,
**dadurch g ekennzeichnet,** dass der Laderaum Mittel aufweist, die dazu ausgebildet sind, ein Fahrrad (3) im Laderaum zu befestigen, wenn das Fahrrad (3), insbesondere ein Reifen des Fahrrads (3), teilweise in die Ausstülpung gesteckt ist.
